# EUROPÄISCHE PATENTANMELDUNG

(11) **EP 3 418 457 A1**
(43) Veröffentlichungstag der Anmeldung: **26.12.2018**
(21) Anmeldenummer: 18178680.7
(22) Anmeldetag: 20.06.2018
(51) Int. Cl.: E03C 1/242, E03C 1/232

(54) **ÜBERWACHUNGSSYSTEM ZUM ÜBERWACHEN EINES WASSERSTANDS IN EINEM SANITÄRELEMENT SOWIE EIN SANITÄRELEMENT**

(30) Priorität: 20.06.2017 DE 102017113544
(71) Anmelder: Grohe AG, 58675 Hemer (DE)
(72) Erfinder: Fan, Zhongde, Shanghai (CN); Limberg, Dirk, 44894 Bochum (DE)

(57) **Zusammenfassung**

Die Erfindung betrifft ein Überwachungssystem (1) zum Überwachen eines Wasserstands (8) in einem Sanitärelement (2). Erfindungsgemäß umfasst das Überwachungssystem (1) eine Sensoreinheit (4), die zumindest einen Sensor (5) zum Erfassen eines Messwertes umfasst und mittels der ein Wasserstand (8) in einem Aufnahmeraum (3) des Sanitärelements (2) ermittelbar ist. Des Weiteren betrifft die Erfindung ein Sanitärelement (2), das zur Wasseraufnahme einen Aufnahmeraum (3) und zum Entleeren des Wassers (6) aus dem Aufnahmeraum (3) zumindest einen Wasserabfluss (11) umfasst.

## Beschreibung

Die vorliegende Erfindung betrifft ein Überwachungssystem zum Überwachen eines Wasserstands in einem Sanitärelement. Außerdem betrifft die Erfindung ein Sanitärelement, das zur Wasseraufnahme einen Aufnahmeraum und zum Entleeren des Wassers aus dem Aufnahmeraum zumindest einen Wasserabfluss umfasst.

Im Stand der Technik sind Sanitärelemente bekannt, die zum Schutz vor Überlaufen einen Überlaufkanal aufweisen, durch den bei Erreichen eines gewissen Wasserstands im Sanitärelement das überschüssige Wasser abgeleitet wird, so dass der Wasserstand zumindest auf einem gleichbleibenden Niveau gehalten werden kann.

Allerdings muss nach neuen Lösungen für den Überlaufschutz gesucht werden, wenn kein Überlaufkanal am Sanitärelement vorhanden ist.

Die Aufgabe wird gelöst durch ein Überwachungssystem zum Überwachen eines Wasserstands in einem Sanitärelement sowie durch ein Sanitärelement gemäß den unabhängigen Patentansprüchen.

Vorgeschlagen wird ein Überwachungssystem zum Überwachen eines Wasserstands in einem Sanitärelement. Das Sanitärelement kann beispielsweise ein Waschbecken, ein Spülbecken, eine Duschwanne, eine Badewanne, eine Toilette und/oder ein Bidet umfassen und ist daher in einem Gebäude angeordnet, wobei mittels des Überwachens des Wasserstandes ein Überlaufen des Wassers vermieden werden kann.

Erfindungsgemäß umfasst das Überwachungssystem eine Sensoreinheit, die zumindest einen Sensor zum Erfassen eines Messwertes umfasst. Außerdem ist mittels der Sensoreinheit ein Wasserstand in einem Aufnahmeraum des Sanitärelements ermittelbar.

Ein maximal zulässiger Wasserstand entspricht ferner beispielsweise dem Wasserstand, bei dem das Wasser gerade nicht aus dem Sanitärelement überläuft. Beispielsweise ist der maximal zulässige Wasserstand derjenige, bei dem ein maximales Fassungsvermögen des Sanitärelements erreicht ist.

Der maximal zulässige Wasserstand kann aber auch derjenige sein, bei dem die Höhe des Wassers noch unter einem Rand des Sanitärelements steht, so dass dieser Unterschied als Sicherheitspuffer dienen kann.

Mit Hilfe der Sensoreinheit und dem Sensor kann nun der Wasserstand im Aufnahmeraum ermittelt werden und beispielsweise durch einen Vergleich mit dem maximal zulässigen Wasserstand das Überlaufen von Wasser aus dem Sanitärelement verhindert werden.

Zusätzlich kann mit Hilfe der Sensoreinheit der Wasserstand im Sanitärelement auch kontinuierlich gemessen werden, d.h. es kann auch jeder Wasserstand im Sanitärelement ermittelt werden.

In einer vorteilhaften Weiterbildung der Erfindung weist die Sensoreinheit einen Speicher auf, in dem zumindest ein Parameter des Sanitärelements hinterlegbar ist. Der Parameter kann beispielsweise die technischen Merkmale des Sanitärelements umfassen. Beispielsweise umfasst der Parameter ein Fassungsvermögen, den maximal zulässigen Wasserstand, eine Höhe eines Wasserzuflusses und/oder eine Tiefe des Sanitärelements. Anhand der Parameter kann die Sensoreinheit entscheiden, ob beispielsweise der gegenwärtig ermittelte Wasserstand im Aufnahmeraum den maximal zulässigen Wasserstand erreicht hat. Daraus kann ermittelt werden, ob die Gefahr des Überlaufens besteht.

Des Weiteren ist es von Vorteil, wenn die Sensoreinheit eine Recheneinheit umfasst, mittels der anhand des von dem zumindest einen Sensor erfassten Messwertes der Wasserstand im Sanitärelement ermittelt werden kann. Zusätzlich oder alternativ kann die Recheneinheit anhand des zumindest einen im Speicher abgespeicherten Parameters den Wasserstand im Sanitärelement ermitteln. Zusätzlich oder alternativ kann auch ein Überschreiten des maximal zulässigen Wasserstandes ermittelt werden. Vorteilhafterweise kann die Recheneinheit den Wasserstand auch berechnen.

Vorteilhaft ist es ferner, wenn das Überwachungssystem zumindest einen Aktor aufweist, mittels dem ein Wasserzufluss des Sanitärelements geöffnet und/oder geschlossen werden kann. Zusätzlich oder alternativ kann mittels des Aktors auch ein Wasserabfluss des Sanitärelements geöffnet und/oder geschlossen werden. Befindet sich beispielsweise zu viel Wasser im Sanitärelement, so dass der maximal zulässige Wasserstand überschritten ist, kann der Aktor den Wasserzufluss schließen, so dass kein Wasser mehr in das Sanitärelement fließt. Zusätzlich oder alternativ kann bei zu viel Wasser, der Aktor auch den Wasserabfluss öffnen, so dass Wasser aus dem Sanitärelement abfließt. Dadurch kann der Wasserstand im Sanitärelement zumindest konstant gehalten oder verringert werden.

Zusätzlich oder alternativ kann der Aktor auch den Wasserzufluss und/oder den Wasserabfluss derart einstellen, dass der Wasserstand im Sanitärelement sinkt oder bei einem Pegel gehalten wird. Dabei fließt eine gewisse Menge Wasser durch den Wasserzufluss in das Sanitärelement hinein und eine gewisse Menge durch den Wasserabfluss aus dem Sanitärelement heraus.

Ebenso ist es von Vorteil, wenn das Überwachungssystem eine mit der Sensoreinheit verbundene Steuerung umfasst. Die Steuerung kann auch zusätzlich oder alternativ mit dem Aktor verbunden sein. Außerdem kann die Steuerung zusätzlich oder alternativ mit der Recheneinheit verbunden sein. Mittels der Steuerung ist der Aktor zum Vermeiden des Überlaufens des Sanitärelements steuerbar. Vorteilhafterweise kann die Steuerung den Aktor derart steuern, dass ein maximal zulässiger Wasserstand nicht überschritten wird. Die Steuerung kann beispielsweise von der Recheneinheit ein Signal erhalten, ob und beispielsweise wie weit sich der gegenwärtige Wasserstand über oder unter dem maximal zulässigen Wasserstand befindet. Entsprechend diesem Signal kann die Steuerung den Aktor ansteuern, der dann beispielsweise bei einem Wasserstand über dem maximal zulässigen Wasserstand den Wasserabfluss öffnet.

Mit Hilfe der Steuerung ist es natürlich auch möglich, dass mittels des Aktors Wasser aus dem Aufnahmeraum abgelassen und/oder weniger Wasser in den Aufnahmeraum geleitet wird, bevor der maximal zulässige Wasserstand erreicht ist. Beispielsweise kann die Steuerung den Wasserstand im Aufnahmeraum derart regeln und/oder steuern, dass dieser 5% unter dem maximal zulässigen Wasserstand bleibt.

In einer vorteilhaften Weiterbildung der Erfindung ist der Sensor ein Drucksensor zum Messen eines Wasserdrucks. Weiterführend kann mittels der Recheneinheit aus dem gemessenen Wasserdruck eine Höhe einer Wassersäule über dem Drucksensor ermittelt werden. Anhand der von dem Drucksensor gemessenen Höhe der Wassersäule und zumindest einem Parameter des Sanitärelements kann mittels der Recheneinheit zumindest der maximal zulässige Wasserstand ermittelt werden. Der Parameter kann beispielsweise einen Wert umfassen, der angibt, an welcher Position der Drucksensor im Sanitärelement angeordnet ist bzw. wird. Beispielsweise kann der Parameter einen Abstand des Drucksensors vom Rand des Sanitärelements umfassen, so dass die Höhe der Wassersäule diesen Abstand nicht überschreiten darf. Es kann also überwacht werden, ob der maximal zulässige Wasserstand erreicht ist. Mit Hilfe des Drucksensors können ferner auch weitere Wasserstände ermittelt werden. Beispielsweise kann mittels des Drucksensors kontinuierlich die Höhe des Wasserstands im Sanitärelement von leer bis voll, wobei voll einem maximal zulässigen Wasserstand entsprechen kann, ermittelt werden. Der Drucksensor weist dabei den Vorteil auf, dass auch eine Verschmutzung des Drucksensors eine gute Druckmessung ermöglicht, so dass er recht zuverlässig ist.

Um auf einfache Weise zumindest den maximal zulässigen Wasserstand im Sanitärelement zu ermitteln, ist es vorteilhaft, wenn der Sensor ein Wasserstandsfühler ist, der bei einem Wasserkontakt mit sich selbst zumindest den maximal zulässigen Wasserstand erkennen kann. Zusätzlich oder alternativ kann mittels der Recheneinheit aus dem Messwert des Wasserstandsfühlers zumindest der maximal zulässige Wasserstand ermittelt werden. Der Wasserstandsfühler kann beispielsweise einen elektrischen Kontakt umfassen, der bei einer Berührung mit Wasser einen elektrischen Stromkreis schließt, so dass dadurch ein Signal abgegeben werden kann, das von der Recheneinheit ausgewertet wird. Aus dem Signal kann die Recheneinheit ermitteln, dass der Wasserspiegel den Wasserstandsfühler erreicht hat.

In einer vorteilhaften Weiterbildung der Erfindung ist der Sensor ein Ultraschallsensor, der eine Laufzeit von Ultraschallwellen zwischen sich und einer Wasseroberfläche des Wassers im Sanitärelement messen kann. Aus diesem Messwert der Laufzeit kann mittels der Recheneinheit ein Abstand zwischen dem Ultraschallsensor und einer Wasseroberfläche ermittelt werden. Zusätzlich oder alternativ kann mittels der Recheneinheit aus zumindest einem Parameter und dem Abstand zumindest der maximale Wasserstand ermittelt werden. Der Parameter enthält dabei beispielsweise Informationen darüber, wie hoch der Sensor über dem Sanitärelement angeordnet ist. Der Ultraschallsensor weist den Vorteil auf, dass er berührungslos den Abstand zwischen sich und der Wasseroberfläche messen kann, woraus zumindest der maximal zulässige Wasserstand berechnet wird. Durch die berührungslose Messung ist eine Beschädigung des Sensors nahezu ausgeschlossen. Mit Hilfe des Ultraschallsensors kann der Wasserstand im Sanitärelement auch kontinuierlich gemessen werden, d.h. es können insbesondere auch Wasserstände zwischen einem leeren und einem vollen (was dem maximal zulässigen Wasserstand entsprechen kann) Sanitärelement ermittelt werden.

Ebenfalls ist es von Vorteil, wenn der Sensor ein Durchflusssensor ist, wobei eine Wasserdurchflussmenge und/oder eine Wasserabflussmenge des Sanitärelements ermittelt werden kann. Die Wasserdurchflussmenge und/oder die Wasserabflussmenge kann beispielsweise von der Recheneinheit ermittelt werden. Die Wasserdurchflussmenge und/oder die Wasserabflussmenge gibt beispielsweise an, wieviel Wasser in einer Zeiteinheit in das Sanitärelement fließt und/oder aus diesem abfließt. Zusätzlich oder alternativ kann mittels der Recheneinheit aus zumindest einem Parameter und der Wasserdurchflussmenge und/oder eine Wasserabflussmenge zumindest der maximale Wasserstand ermittelt werden. Die Recheneinheit kann beispielsweise die Differenz zwischen der Wasserzuflussmenge und der Wasserabflussmenge bilden, wobei die Differenz einer Wassermenge entspricht, die pro Zeiteinheit zu einer Wassermenge im Sanitärelement dazukommt oder die pro Zeiteinheit eine die Wassermenge im Sanitärelement verringert. Wenn der Parameter beispielsweise das maximal mögliche Fassungsvermögen des Sanitärelements umfasst, kann daraus ermittelt werden, wieviel Wasser sich gegenwärtig im Sanitärelement befindet, wie hoch das Wasser im Sanitärelement steht und ob es überläuft. Aus dem Parameter kann weiterhin auch der maximal zulässige Wasserstand im Sanitärelement berechnet werden, wenn der Parameter zum maximal möglichen Fassungsvermögen den maximal zulässigen Wasserstand umfasst. Beispielsweise kann mittels der Wasserzuflussmenge und/oder der Wasserabflussmenge und/oder der Differenz aus der Wasserzuflussmenge und der Wasserabflussmenge auch kontinuierlich der Wasserstand, also auch der Wasserstand zwischen einem leeren und einem vollen Sanitärelement, ermittelt werden.

Vorgeschlagen wird außerdem ein Sanitärelement, das zur Wasseraufnahme einen Aufnahmeraum und zum Entleeren des Wassers aus dem Aufnahmeraum zumindest einen Wasserabfluss umfasst. Das Sanitärelement kann beispielsweise ein Waschbecken, ein Spülbecken, eine Duschwanne, eine Badewanne, eine Toilette und/oder ein Bidet sein.

Erfindungsgemäß umfasst das Sanitärelement ein Überwachungssystem, das nach einem oder mehreren der vorherigen und/oder nachfolgenden Merkmale der Beschreibung ausgebildet ist.

Mit Hilfe des Überwachungssystems kann somit ein Wasserstand im Aufnahmeraum überwacht werden. Dadurch kann verhindert werden, dass ein maximal zulässiger Wasserstand im Aufnahmeraum überschritten wird und dass das Sanitärelement überläuft.

In einer vorteilhaften Weiterbildung der Erfindung weist das Überwachungssystem eine Steuerung auf, die zumindest bei Überschreiten des maximal zulässigen Wasserstandes mittels eines Aktors den Wasserabfluss und/oder den Wasserzufluss steuern und/oder regeln kann. Der Aktor kann ferner zusätzlich oder alternativ mit einer Sensoreinheit des Überwachungssystems verbunden sein, die den Wasserabfluss und/oder den Wasserzufluss steuert. Der Aktor kann den Wasserabfluss beispielsweise dadurch steuern, dass dieser ein im Wasserabfluss angeordnetes Verschlussmittel zumindest teilweise öffnet. Dadurch kann Wasser aus dem Aufnahmeraum abgelassen werden, so dass der Wasserstand im Aufnahmeraum sinkt oder zumindest auf einem gleichbleibenden Niveau verbleibt. Um das Verschlussmittel zu öffnen, kann der Aktor das Verschlussmittel beispielsweise verschieben, so dass eine Abflussöffnung freigegeben wird, durch die das Wasser den Aufnahmeraum verlässt.

Zusätzlich oder alternativ kann der Aktor den Wasserzufluss steuern und/oder regeln, indem dieser ein im Wasserzufluss angeordnetes Ventil zumindest teilweise schließt. Dadurch wird eine Menge an in den Aufnahmeraum einfließendem Wasser verringert, so dass der Wasserstand im Aufnahmeraum zumindest nicht weiter steigt.

Des Weiteren ist es von Vorteil, wenn der Sensor im Bereich des Wasserabflusses angeordnet ist. Der Sensor kann beispielsweise auch an dem im Wasserabfluss angeordneten Verschlussmittel angeordnet sein. Um eine über dem Sensor stehende Wassersäule zu messen und um daraus den Wasserstand zu ermitteln, kann der Sensor als Drucksensor ausgebildet sein. Im Allgemeinen ist es so, dass der Wasserabfluss eines Sanitärelements am tiefsten Punkt des Aufnahmeraums angeordnet ist, um diesen vollständig zu entleeren. In diesem Fall entspricht der Wasserstand im Aufnahmeraum der über dem Drucksensor angeordneten Wassersäule. Ist der Drucksensor nicht im tiefsten Punkt des Aufnahmeraums angeordnet, muss zur Wassersäule noch ein Abstand zwischen dem tiefsten Punkt und dem Drucksensor addiert werden, so dass der Wasserstand ermittelt werden kann.

Um den Wasserstand auf eine einfache Weise zu ermitteln, kann der Sensor an einer Innenseite des Aufnahmeraums angeordnet sein. Der Sensor kann ferner als Wasserstandsfühler ausgebildet sein. Zusätzlich oder alternativ kann der Sensor auch höher als der Wasserabfluss angeordnet sein. Der als Wasserstandsfühler ausgebildete Sensor kann beispielsweise einen elektrischen Kontakt aufweisen, der bei einem Wasserkontakt einen elektrischen Stromkreis schließt. Der Sensor ist beispielsweise in einem Höhenbereich an der Innenseite des Aufnahmeraums angeordnet, bei dem die Wasseroberfläche des maximal zulässigen Wasserstands im Aufnahmeraum angeordnet ist. Dadurch berührt das Wasser den Wasserstandsfühler erst, wenn der Wasserstand die Höhe des Wasserstandsfühlers erreicht hat.

Um den Wasserstand berührungslos zu ermitteln, ist es vorteilhaft, wenn der Sensor an dem Wasserzufluss des Sanitärelements angeordnet ist. Der Sensor kann dazu beispielsweise als ein Ultraschallsensor ausgebildet sein. Des Weiteren kann der Sensor an einer dem Aufnahmeraum zugewandten Seite des Wasserzuflusses angeordnet sein. Der Ultraschallsensor sendet zur Ermittlung des Wasserstands ein Ultraschallsignal aus, das von der Wasseroberfläche des Wassers im Aufnahmeraum zum Ultraschallsensor zurückreflektiert wird. Der Ultraschallsensor misst dabei die Laufzeit des Ultraschallsignals, so dass daraus ein Abstand zwischen der Wasseroberfläche und dem Sensor ermittelt werden kann. Mit Parametern, wie beispielsweise einer Höhe des Ultraschallsensors über dem Sanitärelement, kann daraus der Wasserstand im Aufnahmeraum ermittelt werden. Insbesondere kann daraus der maximal zulässige Wasserstand im Aufnahmeraum ermittelt werden.

Ebenso ist es vorteilhaft, wenn der Sensor ein Durchflusssensor ist, wobei vorzugsweise ein erster Durchflusssensor im Wasserzufluss angeordnet ist. Zusätzlich oder alternativ kann ein zweiter Durchflusssensor im Wasserabfluss angeordnet sein. Mit Hilfe des Durchflusssensors kann die Wassermenge gemessen werden, die in den Aufnahmeraum einströmt und/oder die aus dem Aufnahmeraum ausströmt. Mittels des Durchflusssensors kann somit die Wasserzuflussmenge und/oder die Wasserabflussmenge gemessen werden. Um die Wassermenge zu berechnen, die sich gegenwärtig im Aufnahmeraum befindet, kann beispielsweise mittels der Recheneinheit die Differenz aus Wasserzuflussmenge und Wasserabflussmenge berechnet werden, so dass daraus auf die Wassermenge und auf den Wasserstand geschlossen werden kann. Insbesondere kann aus der Differenz der maximal zulässige Wasserstand ermittelt werden, wenn beispielsweise die Recheneinheit die Differenz mit dem maximalen Fassungsvermögen des Aufnahmeraums vergleicht.

Weitere Vorteile der Erfindung sind in den nachfolgenden Ausführungsbeispielen beschrieben. Es zeigen:
- **Figur 1**: eine Schnittansicht eines Sanitärelements mit einem Überwachungssystem, das eine Sensoreinheit umfasst,
- **Figur 2**: eine Schnittansicht eines Sanitärelements mit einem Überwachungssystem in einem alternativen Ausführungsbeispiel,
- **Figur 3**: eine Schnittansicht eines Sanitärelements mit einem Überwachungssystem in einem weiteren alternativen Ausführungsbeispiel und
- **Figur 4**: eine Schnittansicht eines Sanitärelements mit einem Überwachungssystem in einem weiteren alternativen Ausführungsbeispiel.

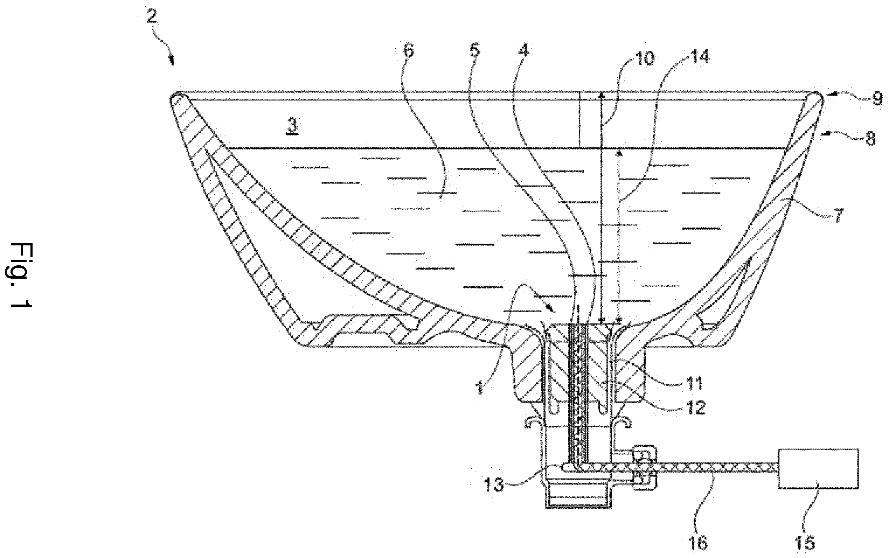

Figur 1 zeigt eine Schnittansicht eines Sanitärelements 2 mit einem Überwachungssystem 1, das eine Sensoreinheit 4 umfasst. Das Sanitärelement 2 umfasst einen Aufnahmeraum 3, der Wasser 6 aufnehmen kann und von einer Wandung 7 begrenzt ist. Das Sanitärelement 2 ist im vorliegenden Ausführungsbeispiel als Waschbecken ausgebildet. Ferner kann das Sanitärelement 2 beispielsweise auch als ein Spülbecken, eine Duschwanne, eine Badewanne, eine Toilette und/oder ein Bidet ausgebildet sein.

Um einen Wasserstand 8 im Aufnahmeraum 3 zu ermitteln, umfasst das Überwachungssystem 1 erfindungsgemäß die Sensoreinheit 4, die zumindest einen Sensor 5 zum Erfassen eines Messwertes umfasst. Der Wasserstand 8 wird zum Schutz vor Überlaufen des Wassers 6 aus dem Aufnahmeraum 3 ermittelt. Gemäß dem in Figur 1 gezeigten Ausführungsbeispiel ist beispielsweise ein maximal zulässiger Wasserstand im Aufnahmeraum 3 dadurch gekennzeichnet, dass dieser bis zu einem Rand 9 des Aufnahmeraums 3 steht, so dass das Wasser 6 gerade nicht aus dem Aufnahmeraum 3 ausläuft.

Alternativ kann der maximal zulässige Wasserstand des Wassers 6 im Aufnahmeraum 3 aber auch durch den Wasserstand 8 im hier gezeigten Ausführungsbeispiel definiert sein. Der Abstand zwischen dem Rand 9 und dem gezeigten Wasserstand 8 kann beispielsweise als Sicherheitspuffer dienen.

Um aus dem durch den Sensor 5 gemessenen Messwert den Wasserstand 8 zu ermitteln, kann die Sensoreinheit 4 eine hier nicht gezeigte Recheneinheit aufweisen.

Des Weiteren kann das Überwachungssystem 1 einen ebenfalls nicht gezeigten Speicher aufweisen, in dem zumindest ein Parameter des Sanitärelements 2 hinterlegbar ist. Der Parameter kann beispielsweise ein Fassungsvermögen des Aufnahmeraums 3, den maximal zulässigen Wasserstand, eine Höhe eines Wasserzuflusses (der hier nicht gezeigt ist) und/oder eine Tiefe 10 des Sanitärelements 2 umfassen.

Das Sanitärelement 2 weist ferner einen Wasserabfluss 11 auf, der im vorliegenden Ausführungsbeispiel mittels eines Verschlussmittels 12 verschließbar ist. Das Verschlussmittel 12 kann mit Hilfe eines Gestänges 13 geöffnet und geschlossen werden.

Gemäß Figur 1 ist der Sensor 5 der Sensoreinheit 4 als ein Drucksensor ausgebildet und ist im vorliegenden Ausführungsbeispiel im Verschlussmittel 12 angeordnet. Der Drucksensor kann alternativ auch im Bereich des Wasserabflusses 11 angeordnet sein.

Mit Hilfe des Drucksensors kann ein Wasserdruck gemessen werden, der gemäß Figur 1 am Drucksensor bzw. am Verschlussmittel 12 herrscht. Aus dem Wasserdruck kann vorzugsweise die Recheneinheit die Höhe einer Wassersäule über dem Drucksensor ermitteln. Wenn der Drucksensor wie im vorliegenden Ausführungsbeispiel gezeigt ist, am tiefsten Punkt des Aufnahmeraums 3 angeordnet ist, ist die Höhe der Wassersäule gleich einer Wassertiefe 14.

Mit Hilfe eines Parameters, der die Tiefe des Sanitärelements 2 umfasst, kann die Recheneinheit mit der Höhe der Wassersäule ermitteln, ob der maximal zulässige Wasserstand erreicht ist. Ermittelt die Recheneinheit beispielsweise, dass die Tiefe 10 des Sanitärelements 2 und die Wassertiefe 14 gleich sind, kann die Recheneinheit darauf schließen, dass das Wasser 6 bis zum Rand 9 steht, wobei das Wasser 6 noch nicht überlauft.

Mit Hilfe des Drucksensors können natürlich auch alle anderen Wasserstände 8 ermittelt werden. Durch die Druckmessung des Wassers 6 am Verschlussmittel 12, kann die Wassertiefe 14 kontinuierlich gemessen werden.

Das Überwachungssystem 1 kann vorteilhafterweise auch eine Steuerung 15 umfassen, die über eine Datenleitung 16 mit der Sensoreinheit 4 und/oder der Recheneinheit verbunden ist. Die Steuerung 15 kann zur Vermeidung des Überlaufens des Wassers 6 einen hier nicht gezeigten Aktor ansteuern, der das Verschlussmittel 12 öffnet. Der Aktor kann dazu mit Hilfe des Gestänges 13 das Verschlussmittel 12 nach oben oder nach unten verschieben, so dass das Verschlussmittel 12 den Wasserabfluss 11 freigibt. Dadurch fließt Wasser 6 aus dem Aufnahmeraum 3 ab, so dass der Wasserstand 8 sinkt. Unterschreitet beispielsweise der Wasserstand 8 wieder den maximal zulässigen Wasserstand, kann die Steuerung 15 das Verschlussmittel 12 wieder schließen, um ein weiteres Absinken des Wasserstands 8 zu verhindern. Die Steuerung 15 kann zusätzlich oder alternativ das Verschlussmittel 12 auch derart ansteuern, dass der Wasserstand 8 konstant bleibt, d.h. durch den Wasserabfluss 11 fließt so viel Wasser aus dem Aufnahmeraum 3 ab, wie durch einen hier nicht gezeigten Wasserzufluss in den Aufnahmeraum 3 einfließt.

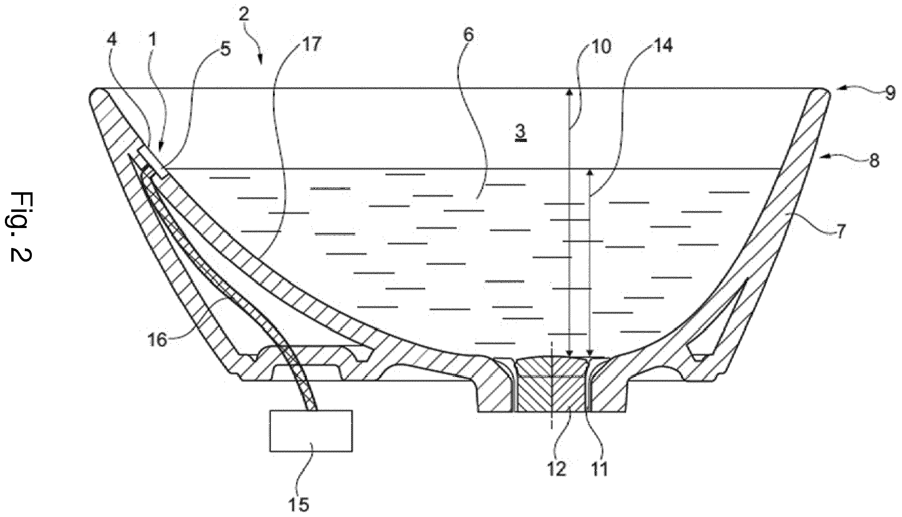

Figur 2 zeigt eine Schnittansicht eines Sanitärelements 2 mit einem Überwachungssystem 1 in einem alternativen Ausführungsbeispiel. In diesem Ausführungsbeispiel ist der Sensor 5 der Sensoreinheit 4 an einer Innenseite 17 des Aufnahmeraums 3 angeordnet. Auf eine Beschreibung der bereits bekannten Merkmale wird der Einfachheit halber ab hier verzichtet.

Der Sensor 5 ist in diesem Ausführungsbeispiel als ein Wasserstandsfühler ausgebildet, der bei einem Wasserkontakt mit sich selbst den Wasserstand 8 messen kann. Der Wasserstandsfühler kann beispielsweise einen elektrischen Kontakt aufweisen, der beim Wasserkontakt einen elektrischen Stromkreis schließt.

Ein gemäß Figur 2 als Wasserstandsfühler ausgebildeter Sensor 5 kann dabei nur einen einzigen Wasserstand 8 messen, was aber genügen kann, um den maximal zulässigen Wasserstand zu ermitteln. Der Sensor 5 kann dazu an einer Stelle an der Innenseite 17 des Aufnahmeraums 3 angeordnet werden, die dem maximal zulässigen Wasserstand entspricht. Beispielsweise ist der Sensor 5 gemäß Figur 2 angeordnet, um noch einen Sicherheitspuffer bis zum Rand 9 auszubilden.

Alternativ kann der Wasserstandsfühler auch derart ausgebildet sein, dass dieser den Wasserstand 8 kontinuierlich zwischen einem leeren und einem vollen Aufnahmeraum 3 messen kann. Der Wasserstandsfühler kann sich dazu beispielsweise entlang der Innenseite 17 vom Rand 9 bis zum Wasserabfluss 11 erstrecken.

Die Sensoreinheit 4 kann beispielsweise auch die Recheneinheit umfassen, die aus der Messung des Sensors 4 den Wasserstand ermittelt. Die Sensoreinheit 4 ist ebenfalls mittels einer Datenleitung 16 mit der Steuerung 15 verbunden. Die Steuerung 15 kann bei Erreichen des maximal zulässigen Wasserstands das Verschlussmittel 12 öffnen, so dass Wasser 6 abfließen kann und der Wasserstand 8 sinkt oder zumindest nicht mehr steigt. Die Steuerung 15 kann zur Regelung des Wasserstands 8 auch einen Wasserzufluss schließen.

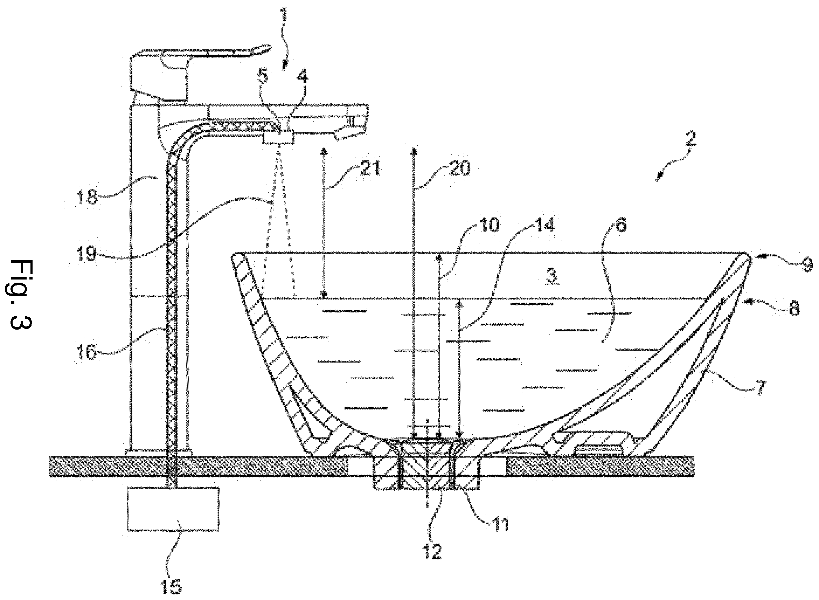

Figur 3 zeigt eine Schnittansicht des Sanitärelements 2 mit einem Überwachungssystem 1 in einem weiteren alternativen Ausführungsbeispiel. In der Figur 3 ist das Sanitärelement 2 mit einem Wasserzufluss 18 gezeigt dargestellt. Der Wasserzufluss 18 ist hier ein Zuflusshahn, kann aber beispielsweise auch ein Duschkopf sein, wenn das Sanitärelement 2 eine Dusche ist.

An einer zum Aufnahmeraum 3 zugewandten Unterseite des Wasserzuflusses 18 ist zur Ermittlung des Wasserstands 8 die Sensoreinheit 4 angeordnet, die den Sensor 5 aufweist. Der Sensor 5 ist hier als ein Ultraschallsensor ausgebildet, der Ultraschallwellen 19 in Richtung des Aufnahmeraums 3 aussenden kann. Die Ultraschallwellen 19 werden am Wasser 3 zum Ultraschallsensor zurückreflektiert, wo sie von diesem empfangen werden. Aus einer Laufzeit der Ultraschallwellen 19 kann beispielsweise die in der Sensoreinheit 4 angeordnete Recheneinheit den Abstand 21 zwischen dem Sensor 5 und dem Wasser 6 ermitteln. Die Recheneinheit kann anhand eines im Speicher hinterlegten Parameters und dem Abstand 21 den Wasserstand 8 ermitteln. Der Parameter umfasst beispielsweise die Höhe 20 des Wasserzuflusses 18. Die Sensoreinheit 4 und/oder die Recheneinheit sind wieder mittels der Datenleitung 16 mit der Steuerung 15 verbunden. Die Steuerung 15 kann bei Überschreiten des maximal zulässigen Wasserstands mittels eines hier nicht gezeigten Aktors den Wasserzufluss 18 und/oder den Wasserabfluss 11 steuern, so dass der Wasserstand 8 sinkt oder zumindest konstant bleibt.

Figur 4 zeigt eine Schnittansicht des Sanitärelements 2 mit einem Überwachungssystem 1 in einem weiteren Ausführungsbeispiel. Das Überwachungssystem 1 weist eine zweigeteilte Sensoreinheit 4a, 4b auf, die jeweils einen Sensor 5a, 5b aufweisen. Das Überwachungssystem 1 weist somit zwei Sensoren 5a, 5b auf. Die Sensoren 5a, 5b sind in diesem Ausführungsbeispiel als Durchflusssensoren ausgebildet, die eine Wasserdurchflussmenge messen können.

Der Sensor 5a ist im Wasserzufluss 18 angeordnet und kann die Wasserzuflussmenge messen, die in den Aufnahmeraum 3 einfließt. Der Sensor 5b ist im Wasserabfluss 11 angeordnet und kann die Wasserabflussmenge messen, die aus dem Aufnahmeraum 3 abfließt. Mit Hilfe der Recheneinheit kann aus der Wasserabflussmenge und/oder der Wasserzuflussmenge der Wasserstand 8 berechnet werden. Beide Sensoreinheiten 4a, 4b sind mit der Steuerung 15 verbunden, die ebenfalls anhand der Messungen der Sensoren 5a, 5b den Wasserstand 8 ermitteln kann. Beispielsweise kann die Steuerung 15 und/oder die Recheneinheit eine Differenz aus Wasserzufluss- und Wasserabflussmenge berechnen, so dass ermittelt werden kann, ob insgesamt mehr Wasser 6 in den Aufnahmeraum 3 einfließt, abfließt oder ob die Wassermenge konstant bleibt. Aus dieser Differenz und einer Zeitmessung kann die Wassermenge im Aufnahmeraum 3 berechnet werden. Mit einem Parameter, beispielsweise dem Fassungsvermögen des Aufnahmeraums 3, kann dann der Wasserstand 8, vorzugsweise zumindest der maximal zulässige Wasserstand, berechnet werden.

Ist der maximal zulässige Wasserstand erreicht, kann die Steuerung 15 den Wasserabfluss 11 und/oder den Wasserzufluss 18 wieder derart steuern und/oder regeln, dass Wasser 6 abgelassen wird und/oder dass weniger Wasser 6 in den Aufnahmeraum 3 einströmen kann.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Überwachungssystem
- 2: Sanitärelement
- 3: Aufnahmeraum
- 4: Sensoreinheit
- 5: Sensor
- 6: Wasser
- 7: Wandung
- 8: Wasserstand
- 9: Rand des Sanitärelements
- 10: Tiefe des Sanitärelements
- 11: Wasserabfluss
- 12: Verschlussmittel
- 13: Gestänge
- 14: Wassertiefe
- 15: Steuerung
- 16: Datenleitung
- 17: Innenseite des Aufnahmeraums
- 18: Wasserzufluss
- 19: Ultraschallwellen
- 20: Höhe des Wasserzuflusses
- 21: Abstand Wasserzufluss zum Wasser

## Patentansprüche

1. Überwachungssystem (1) zum Überwachen eines Wasserstands (8) in einem Sanitärelement (2), **dadurch gekennzeichnet, dass** das Überwachungssystem (1) eine Sensoreinheit (4) umfasst, die zumindest einen Sensor (5) zum Erfassen eines Messwertes umfasst und mittels der ein Wasserstand (8) in einem Aufnahmeraum (3) des Sanitärelements (2) ermittelbar ist.

2. Überwachungssystem (1) nach dem vorherigen Anspruch, **dadurch gekennzeichnet, dass** das Überwachungssystem (1) einen Speicher aufweist, in dem zumindest ein Parameter des Sanitärelements (2), insbesondere ein Fassungsvermögen, ein maximal zulässiger Wasserstand, eine Höhe (20) eines Wasserzuflusses (18) und/oder eine Tiefe (10) des Sanitärelements (2), hinterlegbar ist.

3. Überwachungssystem (1) nach einem der vorherigen Ansprüche, **dadurch gekennzeichnet, dass** die Sensoreinheit (4) eine Recheneinheit umfasst, mittels der anhand des von dem zumindest einen Sensor (5) erfassten Messwertes und/oder des zumindest einen im Speicher abgespeicherten Parameters der Wasserstand (8) im Sanitärelement (2), insbesondere zumindest ein maximal zulässiger Wasserstand und/oder ein Überschreiten des maximal zulässigen Wasserstandes, ermittelbar, insbesondere berechenbar, ist.

4. Überwachungssystem (1) nach einem der vorherigen Ansprüche, **dadurch gekennzeichnet, dass** das Überwachungssystem (1) zumindest einen Aktor aufweist, mittels dem ein Wasserzufluss (18) und/oder ein Wasserabfluss (11) des Sanitärelements (2) geöffnet, geschlossen und/oder eingestellt werden kann.

5. Überwachungssystem (1) nach einem der vorherigen Ansprüche, **dadurch gekennzeichnet, dass** das Überwachungssystem (1) eine mit der Sensoreinheit (4), insbesondere der Recheneinheit, und/oder dem Aktor verbundene Steuerung (15) umfasst, mittels der zum Vermeiden eines Überlaufens des Sanitärelements (2) der Aktor steuerbar ist, insbesondere derart, dass der maximal zulässige Wasserstand nicht überschritten wird.

6. Überwachungssystem (1) nach einem der vorherigen Ansprüche, **dadurch gekennzeichnet, dass** der Sensor (5) ein Drucksensor zum Messen eines Wasserdrucks ist, dass mittels der Recheneinheit aus dem gemessenen Wasserdruck eine Höhe einer Wassersäule über dem Drucksensor ermittelt werden kann und/oder dass mittels der Recheneinheit aus zumindest einem Parameter und der Wassersäule zumindest der maximal zulässige Wasserstand ermittelt werden kann.

7. Überwachungssystem (1) nach einem der vorherigen Ansprüche, **dadurch gekennzeichnet, dass** der Sensor (5) ein Wasserstandsfühler ist, der bei einem Wasserkontakt mit sich selbst zumindest den maximal zulässigen Wasserstand erkennen kann und/oder dass mittels der Recheneinheit aus dem Messwert des Wasserstandsfühlers zumindest der maximal zulässige Wasserstand ermittelt werden kann.

8. Überwachungssystem (1) nach einem der vorherigen Ansprüche, **dadurch gekennzeichnet, dass** der Sensor (5) ein Ultraschallsensor ist, der eine Laufzeit von Ultraschallwellen (19) zwischen sich und einer Wasseroberfläche des Wassers (6) im Sanitärelement (2) messen kann, dass mittels der Recheneinheit aus der Laufzeit ein Abstand (21) zwischen dem Ultraschallsensor und einer Wasseroberfläche ermittelt werden kann und/oder dass mittels der Recheneinheit aus zumindest einem Parameter und dem Abstand (21) zumindest der maximale Wasserstand ermittelt werden kann.

9. Überwachungssystem (1) nach einem der vorherigen Ansprüche, **dadurch gekennzeichnet, dass** der Sensor (5) ein Durchflusssensor ist, dass, insbesondere mittels der Recheneinheit, eine Wasserzuflussmenge und/oder eine Wasserabflussmenge des Sanitärelements (2) ermittelt werden kann und/oder dass mittels der Recheneinheit aus zumindest einem Parameter und, insbesondere einer Differenz zwischen, der Wasserzuflussmenge und/oder der Wasserabflussmenge zumindest der maximale Wasserstand ermittelt werden kann.

10. Sanitärelement (2), das zur Wasseraufnahme einen Aufnahmeraum (3) und zum Entleeren des Wassers (6) aus dem Aufnahmeraum (3) zumindest einen Wasserabfluss (11) umfasst, **dadurch gekennzeichnet, dass** das Sanitärelement (2) ein Überwachungssystem (1) umfasst, das nach einem oder mehreren der vorherigen Ansprüche ausgebildet ist.

11. Sanitärelement (2) nach dem vorherigen Anspruch, **dadurch gekennzeichnet, dass** das Überwachungssystem (1) eine Steuerung (15) aufweist, die zumindest bei Überschreiten eines maximal zulässigen Wasserstandes mittels eines Aktors den Wasserabfluss (11), insbesondere durch zumindest teilweises Öffnen eines im Wasserabfluss (11) angeordneten Verschlussmittels (12), und/oder einen Wasserzufluss (18), insbesondere durch zumindest teilweises Schließen eines Ventils im Wasserzufluss (18), steuern und/oder regeln kann.

12. Sanitärelement (2) nach einem der vorherigen Ansprüche, **dadurch gekennzeichnet, dass** der Sensor (5), insbesondere ein Drucksensor, im Bereich des Wasserabflusses (11), vorzugsweise an einem im Wasserabfluss (11) des Aufnahmeraums (3) angeordneten Verschlussmittels (12), angeordnet ist.

13. Sanitärelement (2) nach einem der vorherigen Ansprüche, **dadurch gekennzeichnet, dass** der Sensor (5), insbesondere ein Wasserstandsfühler, an einer Innenseite (17) des Aufnahmeraums (3) und/oder höher als der Wasserabfluss (11) angeordneten ist.

14. Sanitärelement (2) nach einem der vorherigen Ansprüche, **dadurch gekennzeichnet, dass** der Sensor (5), insbesondere ein Ultraschallsensor, an dem Wasserzufluss (18) des Sanitärelements (2), insbesondere an einer dem Aufnahmeraum (3) zugewandten Seite, angeordnet ist.

15. Sanitärelement (2) nach einem der vorherigen Ansprüche, **dadurch gekennzeichnet, dass** der Sensor ein Durchflusssensor (5a, 5b) ist, wobei vorzugsweise ein erster Durchflusssensor (5a) im Wasserzufluss (18) und/oder ein zweiter Durchflusssensor (5b) im Wasserabfluss (11) angeordnet ist.
